Europäisches Patentamt

(19) European Patent Office

Office européen des brevets

(11) EP 0 745 529 A1

(12) **EUROPEAN PATENT APPLICATION**
published in accordance with Art. 158(3) EPC

(43) Date of publication:
04.12.1996 Bulletin 1996/49

(51) Int. Cl.$^6$: **B62M 9/08**, B62M 9/02,
B62M 1/02

(21) Application number: 95937893.6

(22) Date of filing: 20.11.1995

(86) International application number:
PCT/ES95/00131

(87) International publication number:
WO 96/15935 (30.05.1996 Gazette 1996/25)

(84) Designated Contracting States:
DE FR GB IT NL

(30) Priority: 21.11.1994 ES 9400238
17.07.1995 ES 9500142

(71) Applicant: Carrasco Vergara, Pablo
29017 Malaga (ES)

(72) Inventor: Carrasco Vergara, Pablo
29017 Malaga (ES)

(74) Representative: Garcia Cabrerizo, Francisco
OFICINA GARCIA CABRERIZO S.L.
Vitruvio 23
28006 Madrid (ES)

(54) HUMAN TRACTION SYSTEM BY MEANS OF INDEPENDENT SYNCHRONIZED PEDALS WITH VARIABLE DEVELOPMENT OF THE SINE TYPE

(57) Human traction system by means of independent synchronized pedals with variable development of the sine type characterized in that the pedals are untied in order to achieve, for each leg, a better power distribution as a function of time, so that, when adding the power of both legs, the output power obtained is higher and better distributed throughout the cycle. This result is obtained by causing the velocity of each pedal, throughout one rotation, to vary from a minimum at 90° from the top dead point up to a maximum at the opposite point, following a function of the sine type.

FIG.-6

**Description**

OBJECT OF THE INVENTION

This specification relates to a human drive system using synchronized independent pedals with sinusoidal type variable efficiency, the evident purpose of which consists in increasing the performance of the pedalling action, the power delivered by the legs being provided more uniformly than through the drive systems used in conventional bicycles, further delivering increased average power for the same degree of effort and thus improving the quality of the effort.

FIELD OF THE INVENTION

This invention is applicable to the bicycle manufacturing industry and similar industries, although it may be incorporated to various other industrial fields.

BACKGROUND OF THE INVENTION

Up to the present, in conventional bicycles, one pedal has always been offset 180° in respect to the other pedal.

However, if we divide the circumference described by the pedal into four quadrants (the 1st being the front quadrant, when the pedal is going down, and the 2nd, 3rd and 4th being the subsequent quadrants in the natural movement of the pedal), the first quadrant is the one where the leg delivers practically all its power, meaning that (the pedals being in symmetrical points in respect to the axis) when the legs work in the 1st and 3rd zones, they are able to jointly develop more power than when they work in the 2nd and 4th zones.

This effect is well-known, and efforts have been made to improve it by means of a variable efficiency with the angle produced by the turning of the pedals (using elliptic or oval chain wheels or other mechanism to achieve similar kinetics), enabling the pedals to pass at a higher speed through the 2nd and 4th zones, thus shortening the time during which the power is minimum although maintaining the power unaltered, so that the work increase per cycle is not very significant.

Furthermore, the legs are constantly submitted to high acceleration and deceleration, so that this method cannot be applied in excess, with small oval degrees and scarcely relevant work increments being used.

Thus, the use of this effect is infrequent, and is dependent on the convenience of each individual cyclist.

Subsequently, a work hypothesis is taken as valid (within a certain margin of revolution speed) wherein the power developed by each leg at each moment depends only on the position of the pedal at that very moment; thus, a graph can be presented showing the estimated power during one cycle corresponding to each leg of an average cyclist, as described hereunder.

DESCRIPTION OF THE INVENTION

The human drive system using synchronized independent pedals with sinusoidal type variable efficiency proposed by the invention is in itself an evident novelty in this field of application.

More specifically, the human drive system using synchronized independent pedals with sinusoidal type variable efficiency which is the object of the invention consists in undoing the 180° offsetting link between the pedals.

In this manner, the kinematics of the legs can be varied so that each leg slowly traverses the first quadrant and gradually increases its speed up to the third quadrant, minimizing the time used in passing thorough the latter.

Thus, when the right pedal is leaving the zone in which the power is generated, the left pedal advances in order to avoid the coincidence of both legs in the "dead" zones, one up an the other down (halfway between the 2nd and 4th quadrants), the resulting effect being that one leg cooperates with the other at the point where the latter starts to loose the efficacy of its effort.

Therefore, for a constant chain speed, the speed of each revolution of the pedal varies in time according to a sinusoidal type function (of a period equal to that of the cycle) as a direct result of the mechanism used.

The effect achieved is that the power curve for each leg in the time frame of one cycle is "stretched" in order to cover a larger area.

Thus, in the display of the curves of both legs, the curves cross in points of a larger ordinate, so that the minimum power is increased, the total power is more uniform and the total work output per cycle (and therefore the mean power) is considerably increased.

In principle, it is obvious that the larger the value of $\Phi$, the flatter the total power output curve, although the curve that should desirably be flat is that of the total power consumed by the legs, namely the delivery and the loss in their own movement.

If Φ is increased, the speeds vary all the more and we are drawn apart from the initial hypothesis in view that accelerations and decelerations will appear for the legs, producing changes in the shapes of the curves of the power output to the pedal.

This effect is in fact not as unfavorable as in the case of the previously described oval plane, since the accelerations in this case will have an amplitude of approximately 50%, at half the frequency.

In addition, two favorable effects have to be considered, namely:

- The increase in work output is now considerably higher (for a same increase Φ), reducing the importance of the effect of said accelerations.
- Since the power curve has been made flatter, pedalling is now possible with larger overall efficiencies (since the minimum power has increased) with lesser revolutions, with the result that, on the one hand, the accelerations are proportionately smaller, and, on the other, that the loss of energy consumption in the movement of the legs is lower.

The kinematics being thus described, the following is a description of the mechanical means for obtaining it.

Three different mechanisms are proposed for obtaining the desired kinematics, namely:

A. An independent pedal drive by means of two chains and eccentric chain wheels.
B. An elliptical pedal drive using a single driving chain wheel.
C. An independent pedal drive by means of two chains and two eccentric chain wheels synchronized through elliptic sprocket wheels.

The three mechanisms have similar kinematics, although different application possibilities.

DESCRIPTION OF THE DRAWINGS

In order to complement this description and help to better understand the characteristics of the invention, a set of drawings is attached to this specification, being an integral part thereof, in which the following is displayed having an illustrative, non-limiting character:

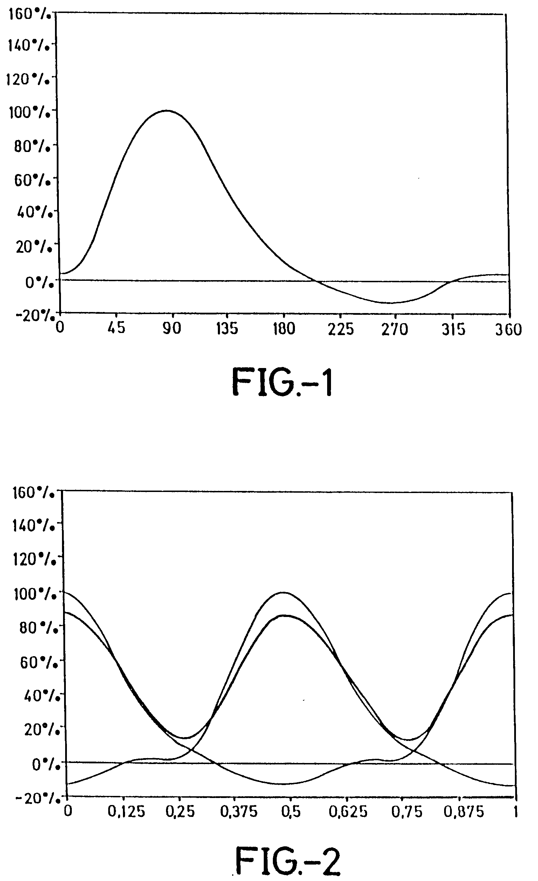

Figure 1 is a graph displaying the angle in degrees of the pedal rod and showing the power output as a function of the angle corresponding to the right leg. Zero angle corresponds to the upper neutral position, this curve being similar to the effective force against the angle of the rod, according to actual measurements on cyclists, as described in "Science of Cycling", by E.R. Burke.

Figure 2 is a chart representing the total one-cycle power in a conventional bicycle resulting from the algebraic sum of both legs. The work obtained per cycle is the area enclosed by the total power curve multiplied by the period.

Figure 3 shows the graphs corresponding to the object of the invention relating to a human drive system using synchronized independent pedals with sinusoidal type variable efficiency, which have been established for a given value (1.83) of the parameter Φ (maximum rotation speed/minimum rotation speed) for the sole purpose of showing the effect achieved, without said value being necessarily the optimum value.

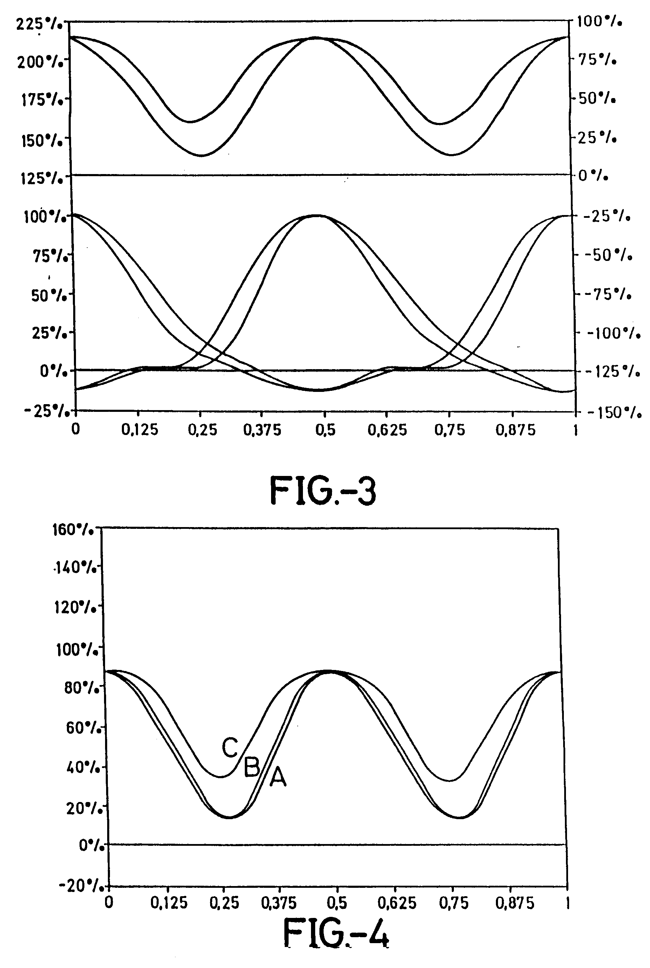

Figure 4 corresponds to a comparative graph between a conventional bicycle A, one fitted with an oval chain wheel B, and one corresponding to the object of the invention C. This graph shown the manner in which curve B achieves a slight increase in the size of the area in respect to A, namely only 5% for an exaggerated oval condition applied to actual practice (large diameter/small diameter = 1.35), whereas C achieves a 29% increase in the size of the area (for Φ = 1.83). It can therefore be ascertained that the system of the invention not only makes the curve more uniform, but also manages to considerably increase the average power.

Figure 5 shows the mechanism assembly (pedal rod, chain wheel, shaft, chain, sprocket wheel and tension pulley) corresponding to either of the legs.

Figure 6 is a front view of the mechanism formed by five integral units or part sets moving integrally.

Figure 7 is a side elevation view of the object shown in Figure 6.

Figure 8 is a plan view of the object shown in Figures 6 and 7.

Figure 9 is a perspective view of a bicycle frame with a back wheel incorporated, wherein the object of the invention has been arranged.

Figure 10 shows, on ending, a view of the bicycle frame with the supporting elements on which the invention is incorporated.

PREFERRED EMBODIMENT OF THE INVENTION

In the light of these figures, the proposed human drive system using synchronized independent pedals with sinusoidal type variable efficiency shown consists in undoing the 180° offset linkage between the pedals.

In this manner, the leg kinematics can be altered so that each leg slowly traverses the 1st quadrant and gradually increases its speed up to the 3rd quadrant, thereby minimizing the time spent in passing through the latter.

Thus, when the right pedal is leaving a "good" zone (where most of the work is achieved), the left leg advances to avoid the coincidence of both in the "dead" zones, one leg being up and the other down (halfway between the 2nd and 4th quadrants). The resulting effect is that one leg cooperates with the other at the point where the latter starts to loose the efficacy of its effort.

Therefore, for a constant chain speed, the pedal's rotational speed varies in time according to a sinusoidal function (of a period equal to that of the cycle) as a direct result of the mechanism employed.

The effect achieved is that the power curve (stretched) per leg in the time frame of one cycle lies in an efficient zone, covering a larger area (as shown in graph 3).

Thus, in the display of the curves of both legs, said curves cross in points of a larger ordinate in such a way that the minimum power is increased, the overall power is therefore more uniform and the total work per cycle (and thus the mean power) is considerably increased, as can be seen in the graph in Figure 3.

The following Figure 4 shows a comparative graph between a conventional bicycle A, a bicycle with an oval chain wheel B and the bicycle object of the invention C.

This graph shows the manner in which curve B achieves a slight increase in area in respect to A, equivalent to only 5% for an exaggerated oval condition in actual practice (larger diameter/smaller diameter = 1.35)

On the other hand, C achieves an increase in area of 29%.

It can therefore be stated that the invention not only makes the power curve more uniform, but also manages to considerably increase the mean power.

As indicated in the description, the invention is provided with three different mechanisms to obtain the desired kinetics.

Reference A refers to an independent pedal drive using two chains and eccentric chain plates in which each pedal rod is integral to its own plate, both revolving freely in respect to the shaft onto which they are mounted.

The chain plates are of a (conventional) circular crown type, and are attached to the pedal rod by means of an eccentric star (or spider).

Each chain plate therefore moves its own chain in order to convey power to the wheel through respective sprocket wheels.

Use of a tension pulley (gear change type) is required for each chain.

The angle formed by the transmission rod and the larger chain wheel radius must be such that when the plate attacks the chain, the pedal is located at approximately 90° from the upper neutral position (maximum torque position).

In order to achieve this synchronization, if so desired, both sprocket wheels must move integrally, the offsetting between the chains being equal to half the number of teeth in the chain plate.

Nonetheless, synchronization only occurs in the natural pedalling direction, since in this case the pedals are not prepared to receive negative forces which would cause a slackening of the corresponding chain.

It may also be worthwhile using independent sprocket wheels, so that the cyclist himself provides synchronization to the pedalling (as is the case with any other form of human movement: swimming, running, walking, etc.).

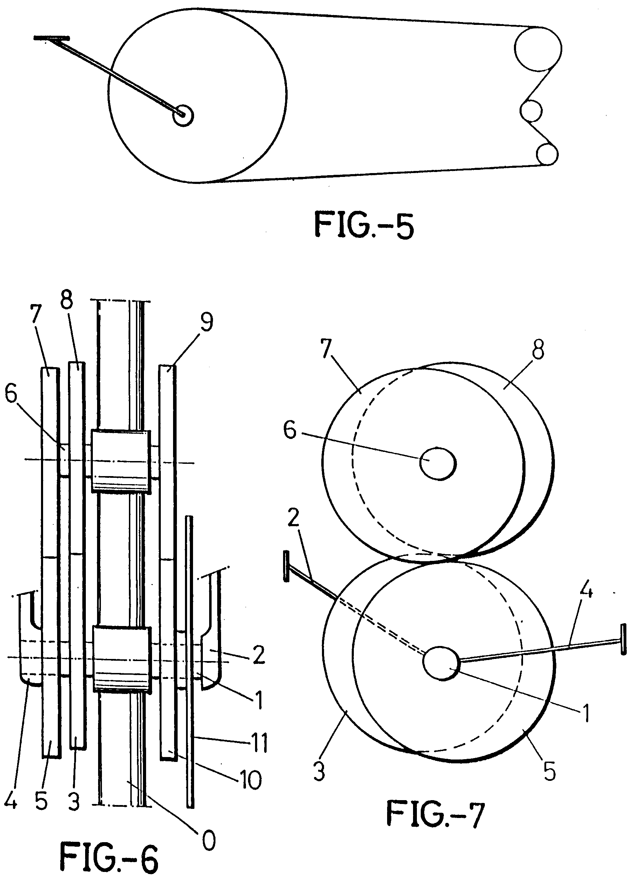

Figure 5 shows the overall mechanism, namely the assembly formed by pedal rod, shaft, chain, chain wheel, sprocket wheel and tension pulley corresponding to either leg.

The advantage of this mechanism lies in that it may be readily manufactured and adapted to bicycles, in addition to allowing several values for one same chain wheel, providing several possible shaft positions in the spider.

Its principal applications are speed competitions, another ideal application being its use as a prototype enabling a cyclist to select the eccentricity appropriate for his particular conditions, since it allows for rapid changes of the above parameter, namely the distance between centers/original crown radius which establishes the eccentricity.

If necessary, it also allows gear change mechanisms to be applied to the sprocket wheels, using two conventional parallel gear changes or some other existing gear change maintaining a fixed offset relation between the chains.

Concerning the independent elliptic pedal drive fitted with a single transmission chain plate, reference B, it should be noted that in this case the purpose is to transmit all the power from each pedal - through respective pairs of elliptic gears - to a secondary shaft which coordinates the pedal kinematics, and from there on to the chain wheel through normal gears.

The mechanism, as illustrated in Figures 5 and 6, divided into five "integral units" (part sets moving in integral fashion), comprises the following:

- Integral unit a (SA), formed by the bicycle frame or chassis (0) fitted with a shaft housing in addition to the standard housing (either in one piece or by means of an adapter).
- Integral unit b (SB), formed by a shaft (1), a right pedal rod (2) and ellipse (3), with a shaft in one of its focuses.

The angle formed by the pedal rod and the larger radius of the ellipse must be such that when drive is generated at this point, the pedal is located at approximately 90° from the upper neutral position (point of maximum torque).

- Integral unit c (SC), formed by the left hand pedal rod (4) and the ellipse (5). It is mounted on shaft (1), passes through a focus of the ellipse and rotates freely around the shaft. The angle formed by the connecting rod and the larger radius of the ellipse must be the same as in SB, i.e. the angle formed by the shaft (1), the right hand pedal rod (2) and the ellipse (3), with the shaft in one of the focuses.

- Integral unit d (SD), formed by a shaft (6), two ellipses (7) and (8), and the wheel (9). The ellipses (7) and (8), the shaft being located in one of their focuses, are offset 180° in respect to each other.

This "integral unit" d or (SD) is the one that achieves full synchronization between the pedals (i.e. between SB and SC). It should be noted that the angle between the pedals is determined by the rotation of the axis (6).

- Integral unit e (SE), formed by wheel or sprocket (10) and chain wheel (11). This integral unit is mounted on shaft (1), over which it rotates freely.

It must be pointed out that ellipses (3) and (5), ellipses (7) and (8) and wheels (9) and (10) are gear wheels.

Ellipses (3), (5), (7) and (8) have the same dimension, the distance between the axes (located in the focuses of the ellipses) being the same as the distance to the main axis of the ellipse, thus ensuring that the tangent condition is maintained at all times and consequently ensuring ellipse-to-ellipse transmission, as can be appreciated in Figure 7.

Operation is as follows:

SB and SC receive the power from the legs, and this power is subsequently conveyed to SD (where the desired kinematic effect is coordinated), which however rotates in the opposite direction. Thereafter it is necessary only to reverse the rotation, a function performed by wheels (9) and (10), SE thus conveying power to the wheel by means of a chain driven from chain wheel (11).

In view that as from chain wheel (11) a conventional drive is used (the position of the chain plate being the same as that of conventional bicycles), bicycle gear change systems available in the market may be applied.

If E is the eccentricity of the ellipse ($r(\theta) = p/(1 + E \cos \theta)$ is the equation of the ellipse in polar coordinates), the relation between both mechanisms is provided by E = the parameter formed by the distance between centers/original crown radius/2.

For the curves shown as examples in charts 3 and 4, E = 0.15.

It is evident that, if E increases, said parameter of $\Phi$ also increases in view that E is now defined, since it is directly measurable; E is therefore the parameter to be borne in mind.

The field of application of this mechanism is not limited, as in the previous case, in view that a complete kinematic link exists between the two pedals without the problem of the negative forces present in the first mechanism.

Furthermore, it is advantageous in that it can be used in conventional gear change systems, so that it is applicable to all forms of cycling applications.

Concerning the embodiment relating to the independent pedal drive using two chains and two eccentric chain wheels synchronized by means of elliptic gears, as in reference C, this mechanism may be considered to be a hybrid variation of the two previous embodiments.

As in mechanism A, each transmission rod is integral to its own chain wheel, each transmission rod/chain wheel assembly being independent from the other.

The chain wheels are of a circular crown type (or similarly adapted geometries), attached to the pedal rod by means of an eccentric star or spider. As previously stated, the parameter established by the distance between centers/original crown radius is determined by the eccentricity.

Consequently, each chain wheel moves its own chain, which in turn conveys power to the wheel through respective sprocket wheels.

A tension pulley of the type used in gear change mechanisms is necessary for each chain.

The angle formed by the pedal rod and the larger chain plate radius should be such that when the plate attacks the chain, the pedal must be located at approximately 90° from the upper neutral position (point of maximum torque).

In order to achieve this total synchronization, two pairs of elliptic gears are used in the same manner as in mechanism B or second embodiment, and it is therefore necessary that a secondary shaft is coupled, the rotation of which determines the offsetting between both pedals.

In this case, each pedal rod is attached to one of the ellipses (thus forming the pedal rod/chain wheel/elliptic gear assembly).

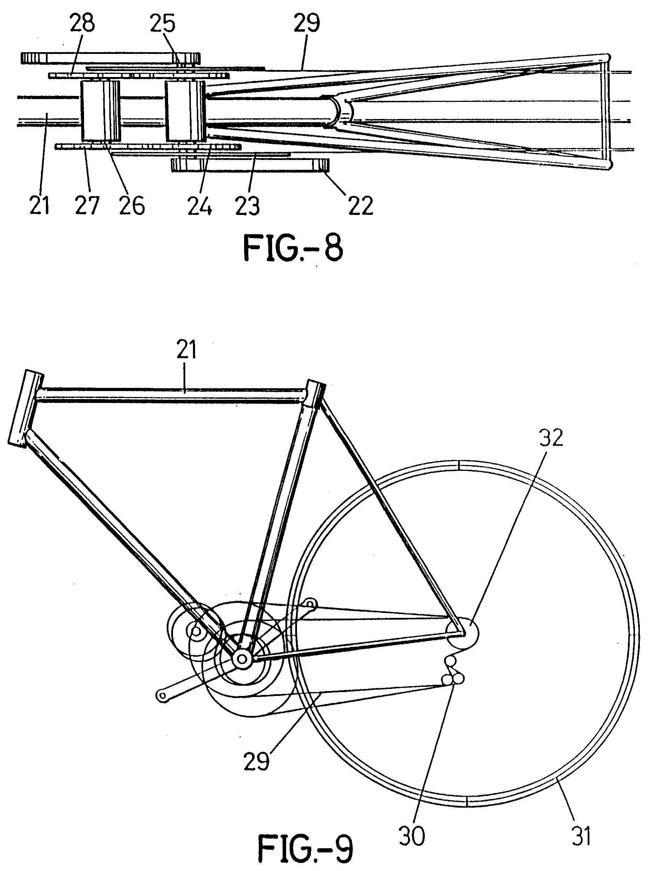

Figures 8 and 9 reflect the following parts:

Frame or chassis (21), fitted with two shaft housings.

A pedal rod (22), a chain plate (23) and an elliptic gear (24) corresponding to the right leg, with symmetric components corresponding to then left leg.

A shaft (25) allowing free rotation of at least one of the previously mentioned pedal rod (22), chain plate (23) and ellipse assemblies.

A shaft (26) and the ellipses (27) and (28), forming an integral assembly.

The left chain (29) with its corresponding tension pulley or gear change (30), with symmetrical components on the right hand side.

The wheel (31), with a sprocket wheel assembly on the right hand side (32) and symmetrical components on the left hand side.

The difference with the first embodiment or A mechanism consists in the introduction of a mechanism which provides total synchronization to the pedalling; the difference we are looking for in respect to the second embodiment or B mechanism consists in that the power output from the pedal rods is conveyed directly to the wheel through chains without having to travel both ways (there and back) through the gear transmission.

Thus, the gears in this mechanism are designed solely for the purpose of synchronizing the pedalling.

In order to satisfactorily achieve this purpose, namely that the main power fails to pass through the gears, the sprocket wheels corresponding to each pedal must be used in a "free wheel" mode so that between them there exists no link other than that imposed by the wheel.

This mechanism allows for gear changes in the sprocket wheels by means of two parallel gear changes that would cause no synchronization problems since these would be overcome by the fact that free wheel sprockets are being used, the only effect consisting in a delay in one of them the moment the affected pedal conveys power through the gears; or by means of a gear change integrated in the bushing.

Given these features, it may be used mainly in race tracks and other speed tests (against the clock) normally requiring close performance margins.

In the light of the three embodiments described, it should be noted that the gears may be quasi elliptical (e.g. circularly eccentric, since small eccentricities are involved), with their corresponding tolerances, provided the "ellipse-to-ellipse" transmission function is complied with (this requires a high teeth modulus value which allows for gear engagement in spite of loosing the tangent condition).

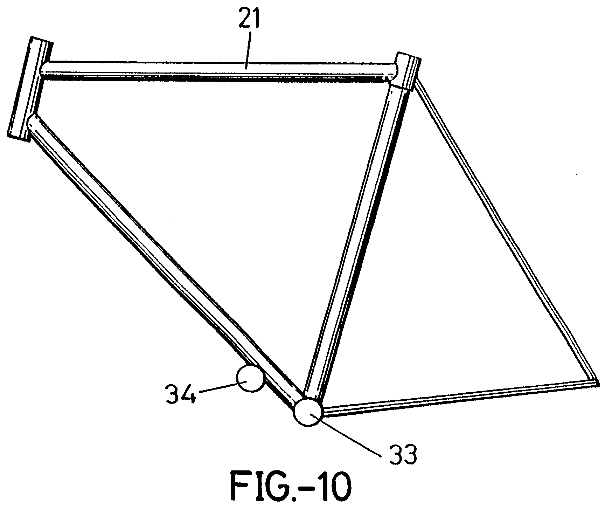

In view that the second and third embodiments incorporate a second shaft (secondary shaft), the only modification over a conventional frame consists in installing a housing for said shaft, as can bee seen in Figure 10, the housing being referenced by (33) for the conventional shaft and by (34) for the second shaft or secondary shaft, this incorporation referenced by (34) being the only modification that exists in the conventional frame (21), the invention thus allowing this second shaft to be located in any other point in respect to the frame, provided the distance between the shafts is the required distance.

In addition, the possibility may be considered of protecting the gear assembly by-means of a fairing (e.g. a plastic housing) in either bicycle.

Irrespective of these mechanisms, the kinematics described are applicable to the field of static bicycles in view that despite the fact that in this case no driving is involved, since no movement exists, the power flows are similar.

These gymnastic devices fitted with pedal rods linked at 180° lack the required pedalling continuity in view that they do not have the natural inertia of standard bicycles and thus the pedalling is uncomfortable; namely, when passing through neutral positions, a strike pedalling sensation is perceived, in addition to their being penalized by more limited energy consumption possibilities.

The use of synchronized independent pedals allows for much greater calorific consumption and provides more comfortable and continuous pedalling, which is the object of these devices.

The elliptic transmission of the second embodiment is used for this application, or else an adaptation of the transmission of the first embodiment mechanism by means of belts going to a secondary shaft.

Lastly, it should be noted that the figures used represent example displays of the manner in which the mechanism can be mounted, alterations being made perfectly feasible provided the described power transmissions are maintained (for example, installing the gears on both sides of the frame, or even inside it, in the event that a double pedalling or helmet structure is used).

The object of this patent is therefore to cover all the sporting modalities encompassing the field of cycling as well as all those applications in which drive through pedals is necessary, since, as already explained, it provides a spectacular increase in performance in respect to pedal drive systems used at present.

## Claims

1. A human drive system using synchronized independent pedals with sinusoidal type variable efficiency, characterized in that transmission is conducted through independent pedals using two chains, one for each pedal, and parallel sprocket wheels secured to each other, the chain wheels used being circular off-center wheels (or circular crown with an eccentric star or spider), with several values being liable to be selected for said eccentricity. In view of this, the speed for each pedal, in one revolution, thus varies from a minimum of approximately 90° from the upper neutral position to a maximum in the opposite position according to a sinusoidal function, thereby avoiding the coincidence of both legs in the neutral positions, namely when the pedals are one up and the other down.

2. A mechanical drive system according to claim 1, wherein the sprocket wheels may rotate independently against the wheel (free wheel), so that the user himself provides synchronization to the pedalling.

3. A mechanical drive system according to the preceding claims, wherein the chain wheels (or the star or spider securing the crown) incorporate different possible positions for the shaft at various distances from the center so that they can be adjusted to work at different eccentricities, the user being able to select the most appropriate.

4. A mechanical drive system according to the preceding claims, to which gear change systems may be incorporated.

5. A mechanical drive system according to the preceding claims, characterized in that transmission is conveyed from the independent, synchronized pedals by means of respective pairs of elliptic gears (and the corresponding secondary shaft (26) onto which two of the elliptic gears, offset 180°, are integrally attached), two eccentric chain wheels and two parallel chains.

6. A mechanical drive system according to the preceding claims, characterized in that it uses a bushing in the back wheel fitted with respective sprocket wheels or sprocket wheel assemblies liable of rotating against the wheel (free wheel) and adopting gear change systems.

7. A mechanical drive system according to claim 5, characterized in that the gears used are quasi elliptical (e.g. circularly eccentric), with corresponding tolerances, provided they continue to comply with their "ellipse-to-ellipse" transmission function.

8. A mechanical drive system according to claims 5 and 7, characterized in that it uses a chassis (a frame, in the case of a bicycle) fitted with two housings (33) and (34) for respective shafts.

9. A mechanical drive system according to the preceding claims, the specific application of which are static bicycles.

FIG.-1

FIG.-2

FIG.-3

FIG.-4

FIG.-5

FIG.-6

FIG.-7

FIG.-8

FIG.-9

FIG.-10

## INTERNATIONAL SEARCH REPORT

| | International application No. |
|---|---|
| | PCT/ES 95/00131 |

**A. CLASSIFICATION OF SUBJECT MATTER**

IPC 6      B62M 9/08 , B62M 9/02 , B62M 1/02

According to International Patent Classification (IPC) or to both national classification and IPC

**B. FIELDS SEARCHED**

Minimum documentation searched (classification system followed by classification symbols)

   B62M

Documentation searched other than minimum documentation to the extent that such documents are included in the fields searched

Electronic data base consulted during the international search (name of data base and, where practicable, search terms used)

   WPIL ; EPODOC ; CIBEPAT

**C. DOCUMENTS CONSIDERED TO BE RELEVANT**

| Category* | Citation of document, with indication, where appropriate, of the relevant passages | Relevant to claim No. |
|---|---|---|
| X<br>Y | DE 3404562 A ( GREIFENBERG) 22.08.85<br>all the document | 1,3,6, 8-11<br>2,7 |
| Y | EP 0514824 A (CHUNG-SUK K.) 25.11.92<br>figure 2. | 2,7 |
| A | US 4398740 A (CLEM) 16.08.83<br>figure 1. | 1 |
| A | FR 2601321 A (SOCIETE CIVILE MRM) 15.01.88<br>all the document. | 1 |
| A | GB 2277065 A (ORAGAN) 19.10.94<br>See the whole document | 1 |
| A | DE 4103946 A (MARTENS B.) 13.08.92<br>all the document | 1 |

| ☐ Further documents are listed in the continuation of Box C. | ☐ See patent family annex. |
|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 29 February 1996 (29.02.96) | 07 March 1996 (07.03.96) |

| Name and mailing address of the ISA/ | Authorized officer |
|---|---|
|    European Patent Office | |
| Facsimile No. | Telephone No. |

Form PCT/ISA/210 (second sheet) (July 1992)